# EUROPEAN PATENT SPECIFICATION

(11) **EP 3 736 230 B1**
(45) Date of publication and mention of the grant of the patent: **16.09.2026**
(21) Application number: 19173637.0
(22) Date of filing: 09.05.2019
(51) Int. Cl.: B65G 1/02, G01G 19/62, G01G 19/52

(54) **INTELLIGENT RACKING**
INTELLIGENTES REGAL
RAYONNAGE INTELLIGENT

(43) Date of publication of application: 11.11.2020
(73) Proprietor: Toyota Material Handling Logistics Solutions AB, 595 81 Mjölby (SE)
(72) Inventor: TEVELL, Martin, 426 77 Västra Frölunda (SE)
(74) Representative: Zacco Sweden AB

(56) References cited:
- CN-U- 205 150 853
- DE-A1- 102010 024 932
- US-A1- 2016 187 186

## Description

### FIELD OF THE INVENTION

The present invention is related to a warehouse safety system, and a method for a warehouse safety system.

### BACKGROUND

It is through US2014/0299389 A1 known to measure local stress on an L-beam. It is also known disclosed a weight-sensing storage system capable of tracking removed items via a camera. Thus it is known to monitor weights and combining this with camera data. Monitoring of a store rack can be performed and it can be determined how many products were removed.

It is through WO 2005/008437 A2 known of an inventory monitoring system. The system uses weight sensors to monitor inventory status. A security alarm event can be initiated, when items are taken off shelves during unauthorized hours.

From the document US10121121B1 it is known to modify a traditional shelf and its support with interposer assemblies for measuring loading on the shelf. This type of shelfs are not appropriate for traditional warehouses that is served by material handling vehicles.

Other examples of prior art are disclosed in DE 10 2010 024932 A1, CN 205 150 853 U and in US 2016/187186 A1. In particular, CN 205 150 853 U discloses a warehouse safety system according to the preamble of claim 1, and a method according to the preamble of claim 9.

### SHORT DESCRIPTION OF THE INVENTION

The invention provides a warehouse safety system as defined in claim 1 and a method as defined in claim 9.

The present invention is related to a warehouse safety system for a warehouse. The system being of the type that is arranged to be served by material handling vehicles such as fork-lift trucks, floor conveyors, very narrow isle trucks or the like. The warehouse safety system comprising a warehouse rack comprising a first plurality of beams. The warehouse safety system also comprising at least one sensor attached to a beam of the first plurality of beams for detecting a sensor data corresponding to the load on the beam. The sensor data preferably being an elongation data of the beam. The warehouse management also comprises a control unit. Further there is also comprised at least one communication device connected to said sensor. The communication device is arranged to be able to communicate detected sensor data to the control unit. Wherein in the control unit is arranged be able to receive sensor data from the sensor continuously. The receipt of sensor data is made in order to store individual sensor data of the beam. And the control unit is arranged such that it uses the received sensor data in order to calculate continuously a load status for a beam of a second plurality of beams, connected to the first plurality of beams.

The advantage of this system is that it is particularly easy to install in a warehouse. Each warehouse rack in the warehouse can easily be fitted with sensors on a beam of a first plurality of beams. The assessment of load status is made for a second beam to which no sensor is fitted, the system will be able to detect load statuses in a particular efficient and simple way for the second beam. Despite what a skilled person would consider a disadvantage, i.e. indirect assessment of a load status being much less precise, compared with direct measuring on the beam that is of desire to assess the load status of. Thus the system as being so simple to install, will improve the overall safety of the warehouse and also the particular warehouse rack to which the system is applied.

According to a further aspect there is disclosed a warehouse safety system that comprises further sensors to form a group of sensors with associated communication devices. The further comprised sensors are attached to further beams of the first plurality, of beams. The control unit is arranged to calculate the load status based on the detected data from this group of sensors.

The advantage of increasing the number of sensors attached to the first plurality of beams, is that a more precise determination of the load status can be achieved. In general more sensors means that the skilled person would consider the system becoming more complex, however as the installed sensors are only required to the first plurality of beams, it is unexpectedly not such as complex task as fitting sensors directly to the second plurality of beams.

According to a further aspect there is disclosed a warehouse safety system being arranged such that if the load status of the beam of the second plurality of beams is loaded to a predetermined value, the control unit is arranged such that a safety action is initiated. The safety action can be initiated by presenting an audio message to an operator. And/or a visual message can be presented to an operator. And/or to the control units sends a warning message to a control centre. And/or to prevent further loading to any beam of the first plurality of the warehouse rack by sending a broadcast stop instruction to all material handling vehicles in the warehouse.

The advantage of sending an audio message to an operator is that the operator can be notified in any position and can be notified without needing to view in a particular direction. The advantage of a visual message being presented is that the ear protection can be worn by operators. Also an operator being hearing impaired is offered a possibility to access the message of the load status. Both an audio message and a visual message can prevent the warehouse rack from being further loaded in such a way that predetermined load status limits is exceeded. The advantage of sending a warning message to a control centre is that there can be further actions taken that includes assessing an overall risk value for the warehouse, or saving the load status for a later evaluation. The advantage of a broadcast message is that the individual vehicle can have a status so early that it need not approach the warehouse rack if the load status indicates that the predetermined value of the load status has been exceeded.

According to the invention the system wherein the system further comprises a warehouse management system. The warehouse management system is able to store data of material items handled in a warehouse, wherein said data at least comprises the weight of a load. It is preferred that the warehouse management system also is able to track the position of individual material items.

The advantage of combining the warehouse safety system with a warehouse management system is that the assessment of the load status for the second beam can further be improved. For example, the individual weight of a load can be used for continuous calibration of each sensor that is detecting on the first plurality of beams. I.e. the warehouse safety system can continuously improve the determination of the load status of the second beam, by also involving load weight data from the warehouse management system. If also position of the individual material item can be added to the calculation, it is also possible to further improve the assessment of the load status of the second beam.

According to the invention the control unit is arranged to coordinate at least material item weight data with sensor data in order to improve the calculation of the load status. The system is preferably arranged such that based on said sensor data and the weight data, the system can determine a deposition position in the warehouse rack for a particular material item. The calculated load status will be at a calculated minimum after deposition of the material item, by using the item weight data.

The advantage of the further aspect is that the use of warehouse management system can be used for local management in the warehouse rack itself. That is the load status of the second beam, can be assessed by the sensors but also item weight data and then use this in order to position the load at the position where the load status will be least affected.

According to a further aspect there is disclosed a warehouse safety system said sensor is a strain gauge. It is preferred that further sensors are all strain gauges.

It is advantageous to use a strain gauge for many reasons. It is particularly simple to install. It is cost effective. It is energy efficient to use such a sensor. It is also robust and need not further devices in order to protect from the working environment in the warehouse. Also strain gauges has low volume and thus can be applied easily without any further structural modifications of the beams to which it is to be attached.

According to a further aspect there is disclosed a warehouse safety system according to wherein the first plurality of beams are essentially horizontal. Further, an angle of crossing between the first plurality of beams and the second plurality of beams is 85-95°, preferably essentially 90°. The second plurality of beams are essentially vertical, wherein the sensor is arranged such that it can measure horizontal length alteration in the first plurality of beams.

It has been found particularly advantageous to apply the sensors to the first plurality when the first plurality are horizontal beams. Horizontal beams in the warehouse is less prone to be run into by material handling vehicles operating in the warehouse, compared with vertical beams. Thus by applying sensors to beams that are horizontal the safety can be improved. That is the sensors will not be measuring on a beam that has been damaged to the same extent. It is to be understood that a beam having been damaged during a material handling operation having a sensor, would give a faulty detection on this particular beam. Also this would lead to a further worsened determination of the load status of the second beam.

According to a further aspect there is disclosed a warehouse safety system wherein the sensor and/or the further of sensors are attached by incorporation into the beam or the beams of the first plurality. The associated communication device/s are also preferably incorporated into respective beam/s.

It has been found advantageous to apply or attach the sensors and/or the communication devices as an internal part of the beams of the first plurality. By this incorporation in particular the sensor devices can be protected, but also the communication devices. Also, the beams need no further adaptation and a new warehouse rack can be mounted with already comprised sensors and communication devices.

The present disclosure is also related to a warehouse rack, that is arranged for use in a warehouse safety system according to any of the aspects above.

The present invention is also related to a method for safety management of a warehouse comprising a warehouse rack with a first plurality of beams comprising a sensor for detecting sensor data of a first beam of the first plurality of beams, wherein the sensor is connected to an communication device, wherein the method comprises the a steps of continuously detect sensor data of the beam of the first plurality of beams. There is further comprised a control unit, wherein the control unit receives the continuously detected sensor data from the communication device.

Further the method comprises the step of using the detected sensor data by the control unit to calculate a load status of a second beam of a second plurality of beams, wherein the second beam is connected to the beam of the first plurality of beams.

The advantages of the method are essentially the same as for the warehouse safety system. The continuous measurement in terms of the method allows for more safe environment for the operations performed in the warehouse. In particular the using of data from a first beam to determine the load status of a second beam is very advantageous as it the second beam can have a load status assessed in an efficient way without changing the second beam by sensor arrangements etc.

According to the method of the invention there is comprised a warehouse management system that is able to track and store at least weight data of individual material items, wherein the method comprises the step of using said weight data in order to further improve the calculation of said load status of said second beam.

Thus as stated above an improved calculation of the load status can be performed using both sensor data and data from the warehouse management system.

According to a further aspect the method also comprises the steps of tracking the position of individual material items. And further the method also comprise the step of to combine the position with the weight value and the detected sensor data of the first beam, for a further improved calculation of the load status of the second beam.

According to further aspect a plurality of beams form which the control unit receives detected sensor data. Further improvements will be achieved of the calculation.

According to a further aspect all beams of the first plurality of beams are essentially horizontal beams, and each beam is connected to the second beam.

The above arrangement further improves the calculation of the load status of the second beam.

### LIST OF DRAWINGS

Fig. 1 discloses a warehouse safety system according to an aspect of the disclosure.
Fig. 2 discloses a load case for a warehouse safety system according to an aspect of the disclosure.
Fig. 3 discloses a method according to a first aspect.
Fig. 4 discloses the warehouse rack of Fig. 1 from above.
Fig. 5 discloses an exemplified material handling vehicle intended to operate together with the disclosure.

### DETAILED DESCRIPTION

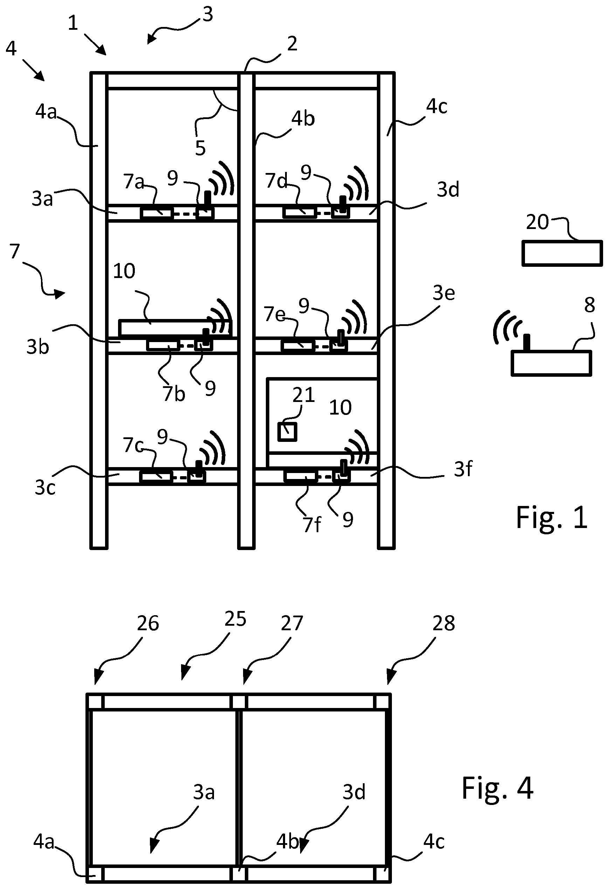

The present disclosure is related to a warehouse safety system 1, as seen in Fig. 1.

The system comprises a warehouse rack 2 as seen in Fig. 1. The warehouse rack 2 has a first plurality of horizontal beams 3. An individual beam 3a has a sensor 7a attached to it. However, for all aspects "attached" means both that it can be externally attached or incorporated into the beam, either in a hollow beam or into the material itself of the beam. The individual beam 3a also has a communication device 9 that is connected to the sensor 7a. The communication device 9, can as the sensor also be incorporated into the beam, in same way as the sensor 7a. The warehouse rack 2 also has a second beam 4b comprised in second plurality of beams 4. The second plurality of beams 4 are essentially vertical.

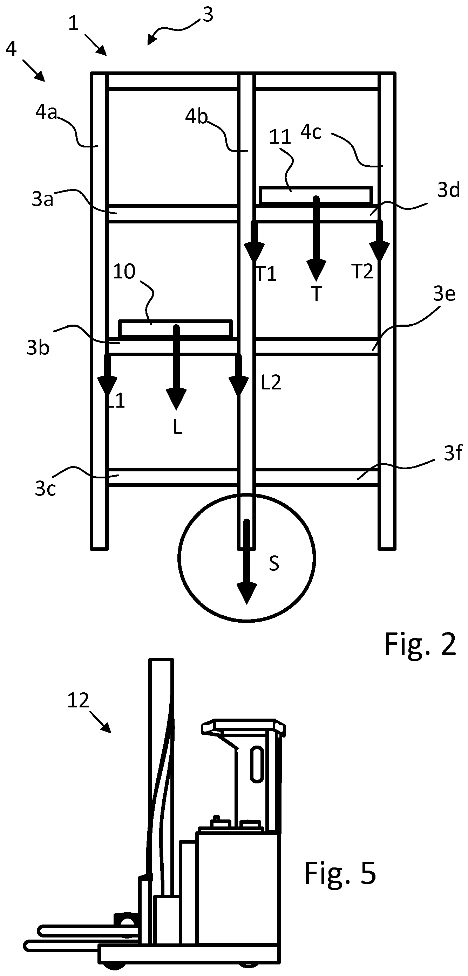

The exemplified warehouse rack 2 of Fig. 1 has three levels of horizontal beams 3a, 3d; 3b,3e; and 3c, 3f, and three vertical beams 4a, 4b, 4c. The warehouse rack 2 also has back horizontal beams 25, and also back vertical beams 26, 27, 28. These beams are well known to the skilled person and is not disclosed in Fig. 2, however see Fig. 4, but the back horizontal beams is preferably constituted in same manner as the discussed first plurality beams, for all aspects of the present disclosure. The first plurality of beams 3, is connected to the second plurality of beams 4. Thus, the first plurality of beams 3 are essentially horizontal. wherein an angle 5 of crossing between the first plurality of beams 3 and the second plurality 4 of beams is 85-95°. The angle 5 is preferably essentially 90°. The second plurality of beams 4 are preferred to be essentially vertical.

In the disclosure it is discussed loading on a beam, i.e. having a load being positioned on a beam. It is to be understood that a load, in general on a pallet, is supported by a front beam and a back beam. It is not to be understood that a load is only supported by a discussed beam. The load is supported on the beam but needs a further back beam in order to be balanced in the warehouse rack.

Referring to Fig. 1 the load 10 is positioned on beam 3b. Further a second load 10 is positioned on beam 3f. An individual material item 21 is comprised in the load 10 of beam 3f. In terms of the present disclosure a load 10 comprises also a group of individual material item 21 and/or also a pallet, pallet collar etc. if applicable.

The horizontal beam 3a is basically constituted in the same way as the other horizontal beams 3b-3f. In particular it is also possible that the horizontal beam on each level are the same long beam.

Also in regards the second plurality of beams 4, the beams 4a, 4b and 4c are essentially constituted in the same manner.

The sensor 7a is a sensor that is able to detect the tension or the load of the individual beam. The sensor 7a can for example function by altering the resistance depending on the deformation of a detecting section of the sensor. It is thus preferably that the sensor is a strain gauge. However the sensor could be any other sensor that is able to detect a deformation of the beam to which it is dedicated. The sensor can be attached to the surface of the beam. The sensor 7a can also be provided as an internal part of the beam, incorporated into the material itself. This would mean that the sensor 7a is completely protected from the environment and thus will augment the reliability of the sensor 7a. The detection made can be powered by a local power source, such as a battery. The sensor 7a is thus preferably arranged such that it can measure horizontal length alteration in the first plurality 3 of beams 3a.

The sensor 7a is connected to the communication device 9. The communication device is arranged such that it can communicate the detected values of the sensor 7a. The communication can be a wire-less, for example Wi-Fi, Bluetooth, or any other radio protocol, preferably a radio protocol that is energy efficient. The communication device 9 can be powered by a local power source, such as a battery. The battery can be common with the sensor 7a. Even if a wire-less transfer of sensor data is preferred it is also possible to provide the warehouse rack 2 with a wiring that allows for transfer of detected sensor data. The sensor is preferred to be arranged to detect the bending or elongation of the beam on which it is detecting. This bending or elongation is to be correlated to a load value to be determined by the control unit 8.

A control unit 8 is also provided in the warehouse safety system 1. The control unit 8 comprises a processor and memory circuits. The control unit 8 has a communication interface, preferably in the form of a wireless interface. By means of the communication interface the control unit 8 can communicate with a communication device 9 as described earlier. The control unit 8 is arranged so that it can store sensor data. By means of a software the control unit can analyse the detected sensor data and provide output. The output can be an information to an operator or warehouse manager, or an action that is sent further to operating machines in the warehouse. The control unit 8 can be positioned on the warehouse rack 2 or at a position at a distance from the warehouse rack 2. It can also be a cloud solution accessible over a network such as the internet.

As seen in Fig. 1 the warehouse safety system 1 can comprise further sensors 7b-f to form a group of sensors 7 with associated communication devices 9. Thus, the exemplified sensor 3a is preferred to be detecting together with the further sensors. In this way a better load status calculation is achieved for the beam 4b. That is the control unit 8 is arranged to calculate the load status based on the detected data from this group of sensors 7. Thus for the whole disclosure the number of sensors 7a-f can be varied. In a preferred aspect all horizontal beams 3a-f of a warehouse rack 2 has sensors 7a-f. But it would also be possible to have two sensors 7a, 7a' on each horizontal beam 3a-c for having a redundancy. Even if not preferred it is also possible to have fewer sensors 7a-f, for example one sensor per level in the warehouse rack 1. In particular if the horizontal beam 3a and 3d are constituted by the same beam and thus it is possible to detect values from sensor 7d when a load is positioned on beam 3a, and equal for each level of the warehouse rack 2.

It should be understood that the sensors 7 is not intended to be exact. The sensors 7 need be so precise such that a weight can be determine in for example grams or kilograms. In order for the warehouse safety system 1 to operate properly a much less precise measurement is only required. This will in fact increase safety as installation and use of the warehouse safety system is not limited to complex and labour intensive installations, instead more warehouse racks can be fitted with the present warehouse safety system.

The control unit 8 is arranged to be able to calculate a load status for the second plurality beams 4. Thus, the control unit 8 receives detected sensor data from the sensor 7a or further sensors 7b-7f. The sensor data is in general sent out continuously.

For the present disclosure the definition of continuously sent out and received sensor data will now be discussed. The term continuously does not mean that the data sent out is sent in an analogue manner, i.e. at any randomly picked point in time. The term continuously should be understood as the sensor data is sent out to the control unit in a regular manner. In particular it should be understood that sensor data could be sent once per hour or once a minute. Preferably the sensor data is not communicated unless there is no change in detected sensor data. Thus continuously does not necessary mean that the sensor data is sent with a fixed time period between two consecutive output of data.

Calibration of the warehouse rack 2. In order for a proper function of the warehouse rack 2 and the warehouse there is need for a calibration. One way of performing the calibration is:
- Set a maximal load value for a beam for example beam 4b of the second plurality to 100 %.
- Determine an elongation or bending value for each horizontal beam 3a-f attached to this beam 4b, by means of subjecting this beam to a group of loads that correspond to 10-100 % loading on each horizontal beam 3a-3f. Determine the detected sensor values for each horizontal beam in correlation to each % value of load.
- Correlate each horizontal load value as calculated to a load status of the beam 4b of the second plurality. Thus if each horizontal beam 3a-3f is loaded at 100 %, set the loading value for the beam 4b to 100%.

It is to be understood that a loading value of 100% is preferred to not correlate to a collapse of the beam 4b.

Thus, an operator loading a load 10 on beam 3a which give the beam 3a a loading value of 80 % will affect the beam 4b with a value that is less than 80 % if all other horizontal beams 3b-3f are unloaded.

Referring to Fig 2 the load 10 is positioned on beam 10. The figure is a schematic figure where the sensors and communication devices for example have been removed for a better view. The load 10 has a relative weight illustrated as L. The weight of the load 10 is distributed to the vertical beams 4a and 4b. Thus, the contribution for the load 10 to the load status of beam 4b is illustrated as component L2, which is a lower value than the relative weight L. An approximate value of L2 would be half of L, the other half being illustrated as L1 in Fig. 2.

The load status of beam 4b as an example would be set as the maximal allowed value for the load on the beam 4b. Maximal value would be set to 100 %. The addition to a load status from load 10 would then be L2 and compared with the Maximal value. In addition to this as stated above the beam 3b also has a set local maximal value for the load weigh to this beam 3b. In Fig. 2 a further load is added to beam 3d. The load has a relative weight of T and an added component T1 is added to load status for beam 4b. Thus, the total and determined load status for beam 4b is the value S which is determined based on the components L1 and T1 from the loads 10 and 11 added to the warehouse rack 2.

In calibration thus different loads are added to a beam for example 3b and the detected values are correlated in 5 % increments such that for each increment a corresponding detected value is calibrated to. If all beams 3a-3f are made from same material and equal dimensions, the calibration of one beam 3b can be reused for the other beams of the warehouse rack 2.

The warehouse safety system 1 is arranged such that if the load status of the beam 4b of the second plurality of beams is loaded to a predetermined value, the control unit 8 is arranged such that a safety is initiated by presenting a message or action. For example there can be presented an audio message to an operator. This message could be presented as an alarm signal or as a voice message with further information. For example the voice message could stat "Warehouse rack is full and cannot be loaded further". It is also possible that a visual message is presented to the operator. This could be in the form of a blinking light or a text message on a display. The text message could state the same as for an audio message, but also add further information which would not be practical for an audio message. For example there could be difficulties for an operator to take in information from an audio message if it is longer than five words. It is also thinkable that the message or warning is sent to a control centre. From this centre it is further possible to take several actions, such as reroute the material handling vehicles 12, see Fig. 5, operating in the warehouse or to open up other warehouse racks that is not full, but has been prevented from being used by for example logistic efficiency reasons. It is also possible that a control centre is triggered to send a broadcast stop instruction to all material handling vehicles 12 in the warehouse 1 because of the risk of collapse of the particular warehouse rack 1. It should be understood that the operator can be an operator of a material handling vehicle 12 that is operating at the warehouse rack 1. However it should also be understood that the operator can be an operator positioned at the control centre or at any position but being reachable by any of the discussed messages.

In terms of the present disclosure it should also be understood that it is intended that a load status of further beams 4a, 4c of the second plurality of beams is also possible to be calculated according to the same way as for the beam 4b. In Fig. 1 it can be seen that beam 4a and 4b are corner beams. However the beams 3a-c are connected to beam 4a and thus it is possible to calculated the load status for beam 4a by means of sensor data from at least sensor 3a, preferably including sensors 3b and 3c. Likewise for beam 4c it is possible to calculate the load status by using at least sensor data from sensor 3d, but also from any of the sensors 3d, 3e, 3f. Thus, it is possible to calculate the load status for any beam of the second plurality 4. Also further if the warehouse rack 2 has a second row of second plurality beams 4, i.e. on the back side of the warehouse rack 2, the load status for these beams can also be calculated in the same way. In this latter case there is sensor data provided form back row first plurality beams 3 that is used by the control unit 8 to calculate this load status.

In terms of the present disclosure, load is the load 10 that a material handling vehicle 12 is transporting around the warehouse. However, it should be understood that a load is not simply one material item on a pallet. It can be several material items on a pallet and the material items can be removed individually from a pallet in the warehouse rack 2. This is typical in an order picking situation. Also the pallet can receive further material items when already in position in the warehouse rack 2. This is often termed return flow, when ordered items is returned. Thus, it should be understood that the load discussed in this application can vary in weight continuously if single material items are removed or added to the load.

The warehouse safety system 1, further comprises a warehouse management system 20. The warehouse management system 20 is arranged such that it is able to store data of individual material items handled in the warehouse. It could of course be arranged such that it can store data of loads as such i.e. pallets directly operable by a material handling vehicle 12.

The data that the warehouse management system at least comprises the weight of a load and or individual material items. It is preferred that the warehouse management system also is able to track the position of individual material items. Further the control unit 8 is arranged to coordinate at least material item weight data with sensor data in order to improve the calculation of the load status, preferably the warehouse safety system 1 is arranged such that based on said sensor data and the weight data, the system can determine a position in the rack 2 for a particular material item where the load status will be at a minimum after deposition of the material item.

The warehouse rack 2 is disclosed as an essential element of the warehouse management system 1. Thus the warehouse rack 2 with the comprised sensors and communication devices are an important part. It is possible to modify an existing warehouse by either modifying existing warehouse racks in the warehouse, but it is also possible to ad warehouse racks 2 that are configured for detecting the necessary load values of predetermined horizontal beams. Also as an aspect of the disclosure of the warehouse rack 2 and also the warehouse management system 1, the warehouse rack 2 itself can be provided with the control unit 8, such that the warehouse rack 2 itself can be a warehouse management system 1 according to the disclosure.

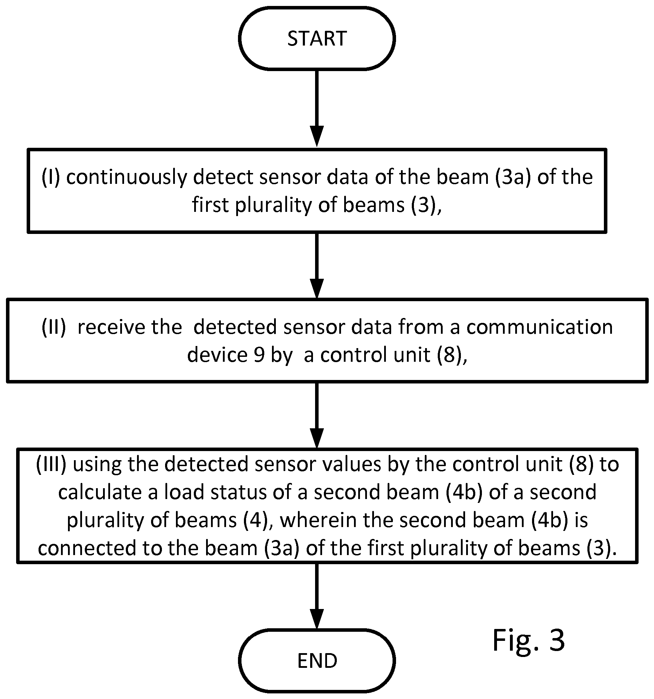

Fig 3 discloses a method for safety management of a warehouse comprising a warehouse rack 2 with a first plurality of beams 3 comprising a sensor 7a for detecting sensor data of a first beam 3a of the first plurality of beams 3, wherein the sensor 7a is connected to an communication device 9, wherein the method comprises the steps of:
Thus, the method requires at least one sensor 7a that detects sensor data of at least one individual beam 3a.
- I continuously detect sensor data of the first beam 3a of the first plurality of beams 3,

The method is intended to not only at one moment detect sensor data. Instead it is intended to detect data in a repetitive manner, such if a sensor data is changed, this is detected.
- II provide a control unit 8 that is arranged to receive the continuously detected sensor values from the communication device 9,

The control unit 8 in the method receives the detected sensor data for ensuing steps of evaluation through calculation. The sensor data is received by the control unit 8 through the communication device 9.
- III using the detected sensor data by the control unit 8 to calculate a load status of a second beam 4b of a second plurality 4 of beams.

The second beam 4b is connected to the individual beam 3a.

Thus, a load status of a beam that is not provided with a sensor is achieved through the method.

Also in terms of the method further steps is provided:
- IIa providing a warehouse management system 20 that is able to track and store at least weight data of individual material items,

Thus the step IIa is provided after or before step III in the method.
- Illa using said weight data in order to further improve the calculation of said load status of said second beam 4b.

Thus, step Illa is performed after step III of the method and further improves the load status calculation made by the control unit 8.

Also in terms of the method further steps is also disclosed, i.e.:
- IIb track the position of individual material items, 21,
- IIIb combine the position with the weight value and the detected sensor data of the first beam 3a, for a further improved calculation of the load status of the second beam 4b.Thus in steps IIb the position of the individual material item, 21 by being tracked be for example the warehouse management system 20.

Further the method is equally improved when there is provided a plurality of beams (3a-3f) from which the control unit 8 receives detected sensor data. Thus, the calculation of load status is performed based on this received data from more than one sensor of the first plurality 7.

The disclosure is also related to a computer software that when stored on a computer medium is able to execute the method according to the steps I-III or with steps Ila, Illa.

The computer software can be provided on a computer medium. Thus making it easy to transport and implement the software to an existing control unit.

In terms of the present disclosure the material handling vehicle 12 as disclosed in Fig. 5 is merely an example. The material handling vehicle can be any vehicle operating in a warehouse, such as fork-lift trucks, floor conveyors, very narrow isle trucks. I can also be fully automated versions of these different types of material handling vehicles or special automated material handling vehicles.

## Claims

1. A warehouse safety system (1) for a warehouse of the type that is arranged to be served by material handling vehicles (12) such as fork-lift trucks, floor conveyors, or very narrow isle trucks, said warehouse safety system comprising:
a warehouse rack (2) comprising a first plurality of beams (3),
at least one sensor (7a) attached to a beam (3a) of the first plurality of beams (3) for detecting a sensor data corresponding to the load on the beam (3a), preferably an elongation data of the beam (3a),
a control unit (8),
at least one communication device (9) connected to said sensor (7a), the communication device (9) is arranged to be able to communicate detected sensor data to the control unit (8),
wherein the control unit (8) is arranged to be able to receive sensor data from the sensor (7a) continuously,
**characterized in that**,
the control unit (8) is arranged to be able to receive sensor data from the sensor (7a) continuously, in order to store individual sensor data of the beam (3a) and wherein the control unit (8) is arranged such that it uses the received sensor data in order to calculate continuously a load status for a beam (4a) of a second plurality of beams (4), connected to the first plurality of beams (3),
wherein the system (1) further comprises a warehouse management system (20), wherein the warehouse management system (20) is able to store data of material items (21) handled in a warehouse, wherein said data at least comprises the weight of a load,
wherein the control unit (8) is arranged to coordinate at least material item weight data with sensor data in order to improve the calculation of the load status.

2. A warehouse safety system (1) of claim 1, wherein the warehouse safety system (1) comprises further sensors (7b-f) to form a group of sensors (7; 7a) with associated communication devices (9), wherein the further comprised sensors are attached to further beams (3b-3f) of the first plurality (3), of beams, wherein the control unit (8) is arranged to calculate the load status based on the detected data from this group of sensors (7).

3. A warehouse safety system (1) of any of the claims 1 or 2, wherein the warehouse safety system (1) is arranged such that if the load status of the beam (4b) of the second plurality of beams is loaded to a predetermined value, the control unit (8) is arranged such that a safety action is initiated by presenting an audio message to an operator and/or a visual message to an operator and/or to send warning message to a control centre and/or to prevent further loading to any beam (3a-3f) of the first plurality (3) of the warehouse rack (1) by sending a broadcast stop instruction to all material handling vehicles (12) in the warehouse (1).

4. A warehouse safety system (1) according to any of the claims above, wherein the warehouse management system also is able to track the position of individual material items (21).

5. A warehouse safety system (1) according to claim 4, wherein the system (1) is arranged such that based on said sensor data and the weight data, the system can determine a deposition position in the warehouse rack (2) for a particular material item (21) where the calculated load status will be at a calculated minimum after deposition of the material item, by using the item weight data.

6. A warehouse safety system (1) according to any of the claims above, wherein said sensor (7a) is a strain gauge, preferably further sensors (7b-7f) are all strain gauges.

7. A warehouse safety system (1) according to any of the claims above, wherein the first plurality of beams (3) are essentially horizontal, wherein an angle (5) of crossing between the first plurality of beams (3) and the second plurality (4) of beams is 85-95°, preferably essentially 90°, and said second plurality of beams are essentially vertical, wherein the sensor (7a) is arranged such that it can measure horizontal length alteration in the first plurality (3) of beams (3a).

8. A warehouse safety system (1) according to any of the claims above, wherein the sensor (7a) and/or the further of sensors (7a-7f) are attached by incorporation into the beam (3a) or the beams (3a-3f) of the first plurality (3), preferably also the associated communication device/s (9) are also incorporated into respective beam/s (3a-3f).

9. A method for safety management of a warehouse comprising a warehouse rack (2) with a first plurality of beams (3) comprising a sensor (7a) for detecting sensor data of a first beam (3a) of the first plurality of beams (3), wherein the sensor (7a) is connected to a communication device (9), wherein further comprised is a control unit (8), wherein the method comprises the steps of:
- (I) continuously detect sensor data of the beam (3a) of the first plurality of beams (3),
- (II) receive the continuously detected sensor data from the communication device (9) by the control unit (8),
**characterized in that** the method further comprises the step of:
- (III) using the detected sensor data by the control unit (8) to calculate a load status of a second beam (4b) of a second plurality of beams (4), wherein the second beam (4b) is connected to the beam (3a) of the first plurality of beams (3), wherein further there is comprised a warehouse management system (20) that is able to track and store at least weight data of individual material items, wherein the method further comprises the step of:
- (IIIa) using said weight data in order to further improve the calculation of said load status of said second beam (4b).

10. Method according to claim 9, wherein the method also comprises the steps of:
- (IIb) track the position of individual material items (21),
- (IIIb) combine the position with the weight value and the detected sensor data of the first beam (3a), for a further improved calculation of the load status of the second beam (4b).

11. A method according to any of the claims 9-10, wherein there is provided a plurality of beams (3a-3f) from which the control unit (8) receives detected sensor data, wherein the calculation of load status is performed based on this received data.

12. A method according to any of the claims 9-11, wherein the first plurality of beams (3) are essentially horizontal beams, and that each beam (3a-3f) is connected to the second beam (4b).

## Patentansprüche

1. Lagersicherheitssystem (1) für ein Lager des Typs, der dazu ausgelegt ist, durch Materialtransportfahrzeuge (12), wie etwa Gabelstapler, Flurförderer oder Schmalganggeräte, bedient zu werden, wobei das Lagersicherheitssystem Folgendes umfasst:
ein Lagerregal (2), das eine erste Vielzahl von Balken (3) umfasst,
mindestens einen Sensor (7a), der an einem Balken (3a) der ersten Vielzahl von Balken (3) zum Erfassen von Sensordaten, die der Belastung des Balkens (3a) entsprechen, vorzugsweise Dehnungsdaten des Balkens (3a), befestigt ist,
eine Steuereinheit (8),
mindestens eine Kommunikationsvorrichtung (9), die mit dem Sensor (7a) verbunden ist, wobei die Kommunikationsvorrichtung (9) so ausgelegt ist, dass sie in der Lage ist, erfasste Sensordaten an die Steuereinheit (8) zu kommunizieren,
wobei die Steuereinheit (8) so ausgelegt ist, dass sie in der Lage ist, Sensordaten von dem Sensor (7a) kontinuierlich zu empfangen,
**dadurch gekennzeichnet, dass**
die Steuereinheit (8) so angeordnet ist, dass sie in der Lage ist, Sensordaten von dem Sensor (7a) kontinuierlich zu empfangen, um einzelne Sensordaten des Balkens (3a) zu speichern, und wobei die Steuereinheit (8) derart ausgelegt ist, dass sie die empfangenen Sensordaten verwendet, um kontinuierlich einen Belastungsstatus für einen Balken (4a) einer zweiten Vielzahl von Balken (4) zu berechnen, der mit der ersten Vielzahl von Balken (3) verbunden ist,
wobei das System (1) ferner ein Lagerverwaltungssystem (20) umfasst, wobei das Lagerverwaltungssystem (20) in der Lage ist, Daten von Materialposten (21) zu speichern, die in einem Lager transportiert werden, wobei die Daten mindestens das Gewicht einer Last umfassen,
wobei die Steuereinheit (8) dazu ausgelegt ist, zumindest Materialpostengewichtsdaten mit Sensordaten abzustimmen, um die Berechnung des Belastungsstatus zu verbessern.

2. Lagersicherheitssystem (1) nach Anspruch 1, wobei das Lagersicherheitssystem (1) weitere Sensoren (7b-f) umfasst, um eine Gruppe von Sensoren (7; 7a) mit zugehörigen Kommunikationsvorrichtungen (9) zu bilden, wobei die ferner umfassten Sensoren an weiteren Balken (3b-3f) der ersten Vielzahl (3) von Balken befestigt sind, wobei die Steuereinheit (8) dazu ausgelegt ist, den Belastungsstatus basierend auf den erfassten Daten von dieser Gruppe von Sensoren (7) zu berechnen.

3. Lagersicherheitssystem (1) nach einem der Ansprüche 1 oder 2, wobei das Lagersicherheitssystem (1) derart ausgelegt ist, dass, wenn der Belastungsstatus des Balkens (4b) der zweiten Vielzahl von Balken auf einen vorbestimmten Wert belastet wird, die Steuereinheit (8) derart ausgelegt ist, dass eine Sicherheitsmaßnahme eingeleitet wird, indem eine akustische Nachricht einem Bediener und/oder eine visuelle Nachricht einem Bediener präsentiert wird, und/oder dazu ausgelegt ist, eine Warnnachricht an ein Kontrollzentrum zu senden und/oder eine weitere Belastung eines beliebigen Balkens (3a-3f) der ersten Vielzahl (3) des Lagerregals (1) zu verhindern, indem eine Rundruf-Stoppanweisung an sämtliche Materialtransportfahrzeuge (12) in dem Lager (1) gesendet wird.

4. Lagersicherheitssystem (1) nach einem der vorstehenden Ansprüche, wobei das Lagerverwaltungssystem zudem in der Lage ist, die Position von einzelnen Materialposten (21) zu verfolgen.

5. Lagersicherheitssystem (1) nach Anspruch 4, wobei das System (1) derart ausgelegt ist, dass das System basierend auf den Sensordaten und den Gewichtsdaten eine Ablageposition in dem Lagerregal (2) für einen bestimmten Materialposten (21), an welcher der berechnete Belastungsstatus ein berechnetes Minimum nach Ablage des Materialpostens erreicht, unter Verwendung der Postengewichtsdaten bestimmen kann.

6. Lagersicherheitssystem (1) nach einem der vorstehenden Ansprüche, wobei es sich bei dem Sensor (7a) um einen Dehnungsmesser handelt, wobei es sich vorzugsweise bei sämtlichen weiteren Sensoren (7b-7f) um Dehnungsmesser handelt.

7. Lagersicherheitssystem (1) nach einem der vorstehenden Ansprüche, wobei die erste Vielzahl von Balken (3) im Wesentlichen horizontal ist, wobei ein Winkel (5) einer Kreuzung zwischen der ersten Vielzahl von Balken (3) und der zweiten Vielzahl (4) von Balken 85-95°, vorzugsweise im Wesentlichen 90°, beträgt und die zweite Vielzahl von Balken im Wesentlichen vertikal ist, wobei der Sensor (7a) derart ausgelegt ist, dass er eine horizontale Längenänderung in der ersten Vielzahl (3) von Balken (3a) messen kann.

8. Lagersicherheitssystem (1) nach einem der vorstehenden Ansprüche, wobei der Sensor (7a) und/oder die weiteren Sensoren (7a-7f) durch Einbau in den Balken (3a) oder die Balken (3a-3f) der ersten Vielzahl (3) befestigt sind, wobei vorzugsweise auch die zugehörige/n Kommunikationsvorrichtung/en (9) zudem in den/die jeweiligen Balken (3a-3f) eingebaut ist/sind.

9. Verfahren zur Sicherheitsverwaltung eines Lagers, das ein Lagerregal (2) mit einer ersten Vielzahl von Balken (3) umfasst, die einen Sensor (7a) zum Erfassen von Sensordaten eines ersten Balkens (3a) der ersten Vielzahl von Balken (3) umfasst, wobei der Sensor (7a) mit einer Kommunikationsvorrichtung (9) verbunden ist, wobei ferner eine Steuereinheit (8) umfasst ist, wobei das Verfahren die folgenden Schritte umfasst:
- (I) kontinuierliches Erfassen von Sensordaten des Balkens (3a) der ersten Vielzahl von Balken (3),
- (II) Empfangen der kontinuierlich erfassten Sensordaten von der Kommunikationsvorrichtung (9) durch die Steuereinheit (8),
**dadurch gekennzeichnet, dass** das Verfahren ferner den folgenden Schritt umfasst:
- (III) Verwenden der erfassten Sensordaten durch die Steuereinheit (8), um einen Belastungsstatus eines zweiten Balkens (4b) einer zweiten Vielzahl von Balken (4) zu berechnen, wobei der zweite Balken (4b) mit dem Balken (3a) der ersten Vielzahl von Balken (3) verbunden ist, wobei ferner ein Lagerverwaltungssystem (20) umfasst ist, das in der Lage ist, zumindest Gewichtsdaten von einzelnen Materialposten zu verfolgen und zu speichern, wobei das Verfahren ferner den folgenden Schritt umfasst:
- (IIIa) Verwenden der Gewichtsdaten, um die Berechnung des Belastungsstatus des zweiten Balkens (4b) weiter zu verbessern.

10. Verfahren nach Anspruch 9, wobei das Verfahren zudem die folgenden Schritte umfasst:
- (IIb) Verfolgen der Position von einzelnen Materialposten (21),
- (IIIb) Kombinieren der Position mit dem Gewichtswert und den erfassten Sensordaten des ersten Balkens (3a) für eine weiter verbesserte Berechnung des Belastungsstatus des zweiten Balkens (4b).

11. Verfahren nach einem der Ansprüche 9-10, wobei eine Vielzahl von Balken (3a-3f) bereitgestellt ist, von der die Steuereinheit (8) erfasste Sensordaten empfängt, wobei die Berechnung des Belastungsstatus basierend auf diesen empfangenen Daten durchgeführt wird.

12. Verfahren nach einem der Ansprüche 9-11, wobei die erste Vielzahl von Balken (3) im Wesentlichen horizontale Balken sind und jeder Balken (3a-3f) mit dem zweiten Balken (4b) verbunden ist.

## Revendications

1. Système de sécurité d'entrepôt (1) pour un entrepôt du type qui est agencé pour être desservi par des véhicules de manutention (12) tels que des chariots élévateurs à fourche, des convoyeurs au sol, ou des chariots à allées très étroites, ledit système de sécurité d'entrepôt comprenant :
un rayonnage d'entrepôt (2) comprenant une première pluralité de poutres (3),
au moins un capteur (7a) fixé à une poutre (3a) de la première pluralité de poutres (3) pour détecter des données de capteur correspondant à la charge sur la poutre (3a), de préférence une donnée d'allongement de la poutre (3a),
une unité de commande (8),
au moins un dispositif de communication (9) connecté audit capteur (7a), le dispositif de communication (9) est agencé pour pouvoir communiquer des données de capteur détectées à l'unité de commande (8),
dans lequel l'unité de commande (8) est agencée pour pouvoir recevoir des données de capteur du capteur (7a) en continu,
**caractérisé en ce que**
l'unité de commande (8) est agencée pour pouvoir recevoir des données de capteur du capteur (7a) en continu, afin de stocker des données de capteur individuelles de la poutre (3a) et dans lequel l'unité de commande (8) est agencée de telle sorte qu'elle utilise les données de capteur reçues afin de calculer en continu un état de charge pour une poutre (4a) d'une seconde pluralité de poutres (4), connectée à la première pluralité de poutres (3),
dans lequel le système (1) comprend en outre un système de gestion d'entrepôt (20), dans lequel le système de gestion d'entrepôt (20) est capable de stocker des données d'articles de matériaux (21) manipulés dans un entrepôt, dans lequel lesdites données comprennent au moins le poids d'une charge,
dans lequel l'unité de commande (8) est agencée pour coordonner au moins des données de poids d'articles de matériaux avec des données de capteur afin d'améliorer le calcul de l'état de charge.

2. Système de sécurité d'entrepôt (1) selon la revendication 1, dans lequel le système de sécurité d'entrepôt (1) comprend d'autres capteurs (7b-f) pour former un groupe de capteurs (7 ; 7a) avec des dispositifs de communication associés (9), dans lequel les autres capteurs compris sont fixés à d'autres poutres (3b-3f) de la première pluralité (3) de poutres, dans lequel l'unité de commande (8) est conçue pour calculer l'état de charge sur la base des données détectées à partir de ce groupe de capteurs (7).

3. Système de sécurité d'entrepôt (1) selon l'une quelconque des revendications 1 ou 2, dans lequel le système de sécurité d'entrepôt (1) est agencé de telle sorte que si l'état de charge de la poutre (4b) de la seconde pluralité de poutres est chargé à une valeur prédéterminée, l'unité de commande (8) est agencée de telle sorte qu'une action de sécurité est initiée en présentant un message audio à un opérateur et/ou un message visuel à un opérateur et/ou pour envoyer un message d'avertissement à un centre de commande et/ou pour empêcher un chargement supplémentaire sur une poutre (3a-3f) de la première pluralité (3) du rayonnage d'entrepôt (1) en envoyant une instruction d'arrêt diffusée à tous les véhicules de manutention (12) dans l'entrepôt (1).

4. Système de sécurité d'entrepôt (1) selon l'une quelconque des revendications ci-dessus, dans lequel le système de gestion d'entrepôt est également capable de suivre la position d'articles de matériaux individuels (21).

5. Système de sécurité d'entrepôt (1) selon la revendication 4, dans lequel le système (1) est agencé de telle sorte que, sur la base desdites données de capteur et des données de poids, le système peut déterminer une position de dépôt dans le rayonnage d'entrepôt (2) pour un article de matériau particulier (21) où l'état de charge calculé sera à un minimum calculé après le dépôt de l'article de matériau, en utilisant les données de poids d'article.

6. Système de sécurité d'entrepôt (1) selon l'une quelconque des revendications précédentes, dans lequel ledit capteur (7a) est une jauge de contrainte, de préférence d'autres capteurs (7b-7f) sont tous des jauges de contrainte.

7. Système de sécurité d'entrepôt (1) selon l'une quelconque des revendications précédentes, dans lequel la première pluralité de poutres (3) est essentiellement horizontale, dans lequel un angle (5) de croisement entre la première pluralité de poutres (3) et la seconde pluralité (4) de poutres est de 85 à 95°, de préférence essentiellement de 90°, et ladite seconde pluralité de poutres est essentiellement verticale, dans lequel le capteur (7a) est agencé de telle sorte qu'il puisse mesurer une modification de longueur horizontale dans la première pluralité (3) de poutres (3a).

8. Système de sécurité d'entrepôt (1) selon l'une quelconque des revendications ci-dessus, dans lequel le capteur (7a) et/ou les autres capteurs (7a-7f) sont fixés par incorporation dans la poutre (3a) ou les poutres (3a-3f) de la première pluralité (3), de préférence également le ou les dispositifs de communication associés (9) sont également incorporés dans la ou les poutres respectives (3a-3f).

9. Procédé de gestion de sécurité d'un entrepôt comprenant un rayonnage d'entrepôt (2) avec une première pluralité de poutres (3) comprenant un capteur (7a) pour détecter des données de capteur d'une première poutre (3a) de la première pluralité de poutres (3), le capteur (7a) étant connecté à un dispositif de communication (9) comprenant en outre une unité de commande (8), le procédé comprenant les étapes consistant à :
- (I) détecter en continu des données de capteur de la poutre (3a) de la première pluralité de poutres (3),
- (II) recevoir les données de capteur détectées en continu à partir du dispositif de communication (9) par l'unité de commande (8),
**caractérisé en ce que** le procédé comprend en outre l'étape consistant à :
- (III) utiliser les données de capteur détectées par l'unité de commande (8) pour calculer un état de charge d'une seconde poutre (4b) d'une seconde pluralité de poutres (4), la seconde poutre (4b) étant connectée à la poutre (3a) de la première pluralité de poutres (3), comprenant en outre un système de gestion d'entrepôt (20) qui est capable de suivre et de stocker au moins les données de poids d'éléments de matériaux individuels, dans lequel le procédé comprend en outre l'étape consistant à :
- (IIIa) utiliser lesdites données de poids afin d'améliorer encore le calcul dudit état de charge de ladite seconde poutre (4b).

10. Procédé selon la revendication 9, dans lequel le procédé comprend également les étapes consistant à :
- (IIb) suivre la position d'éléments de matériaux individuels (21),
- (IIIb) combiner la position avec la valeur de poids et les données de capteur détectées de la première poutre (3a), pour un calcul encore amélioré de l'état de charge de la seconde poutre (4b).

11. Procédé selon l'une quelconque des revendications 9 à 10, dans lequel il est prévu une pluralité de poutres (3a-3f) à partir desquelles l'unité de commande (8) reçoit des données de capteur détectées, dans lequel le calcul de l'état de charge est effectué sur la base de ces données reçues.

12. Procédé selon l'une quelconque des revendications 9 à 11, dans lequel la première pluralité de poutres (3) sont essentiellement des poutres horizontales, et que chaque poutre (3a-3f) est connectée à la seconde poutre (4b).
